# EUROPÄISCHE PATENTSCHRIFT

(11) **EP 1 885 555 B1**
(45) Veröffentlichungstag und Bekanntmachung des Hinweises auf die Patenterteilung: **16.12.2009**
(21) Anmeldenummer: 06754103.7
(22) Anmeldetag: 02.06.2006
(51) Int. Cl.: B32B 17/10, C03C 17/36

(54) **FARBIG STRUKTURIERTE LOW-E-SCHICHTSYSTEME UND VERFAHREN ZUR ERZEUGUNG DER FARBIG STRUKTURIERTEN LOW-E-SCHICHTSYSTEME SOWIE DEREN VERWENDUNG**
LOW-E LAYERED SYSTEMS COMPRISING COLOURED STRUCTURES, METHOD FOR PRODUCING THE LATTER AND USE OF SAID SYSTEMS
SYSTEMES DE COUCHES A FAIBLE E STRUCTURES ET EN COULEURS, LEUR PROCEDE DE PRODUCTION ET LEUR UTILISATION

(30) Priorität: 03.06.2005 DE 102005025982
(43) Veröffentlichungstag der Anmeldung: 13.02.2008
(73) Patentinhaber: boraident GmbH, 06118 Halle/Saale (DE)
(72) Erfinder: BERG, Klaus-Jürgen, 06130 Halle (DE); REDMANN, Frank, 06114 Halle (DE); SCHICHT, Heinz, 06925 Bethau (DE)
(74) Vertreter: COHAUSZ DAWIDOWICZ HANNIG & SOZIEN
(86) Internationale Anmeldenummer: PCT/EP2006/005314
(87) Internationale Veröffentlichungsnummer: WO 2006/128727

(56) Entgegenhaltungen:
- EP-A- 1 108 693
- WO-A-01/85463
- WO-A-02/085807
- DE-A1- 10 258 522
- DE-A1- 19 841 547
- RAINER T ET AL: "FARBIGE INNENBESCHRIFTUNG VON FLOATGLAS DURCH CO2-LASER BESTRAHLUNG" GLASTECHNISCHE TAGUNG. KURZREFERATE, 2. Juni 1999 (1999-06-02), Seiten 127-130, XP001117571
- RAINER T: "WIRD FENSTERGLAS ZUM HIGH-TECH-MATERIAL? KLEINE TEILCHEN, GROSSE WIRKUNG" GLASWELT: DEUTSCHE GLASERZEITUNG, GENTNER VERLAG, STUTTGART, DE, Nr. 6, 2000, Seiten 46-51, XP001107265 ISSN: 0017-1107

## Beschreibung

Die Erfindung betrifft Low-E-Schichtsysteme mit farbigen Strukturen und ein Verfahren zur Erzeugung der Strukturen sowie deren Verwendung.

Low-E-Schichten und Low-E-Schichtsysteme besitzen bei hoher Transmission im sichtbaren Teil des Spektrums im infraroten Spektralbereich eine hohe Reflexion und damit verbundene niedrige Emissivität (low-E: low emissivity). Dadurch wirken sie als gute Reflektoren für Wärmestrahlung bei Raumtemperatur und verleihen Glas und durchsichtigen Polymerfolien eine sehr gute Wärmedämmung, die sie ohne eine solche Beschichtung nicht hätten. Ein typischer Vertreter der homogenen Low-E-Schichten ist eine Schicht aus In₂O₃:Sn (ITO) und einer für die Low-E-Schichtsysteme ein System aus Schichten, in das als Funktionsschicht eine solche aus Silber eingeschlossen ist. In den Schichtsystemen werden an Stelle der Silberschicht auch Gold- oder Kupferschichten zur Erzeugung der hohen Reflexion im infraroten Spektralbereich eingesetzt. Es gibt auch Schichtsysteme, die trotz einer sehr hohen Reflexion im infraroten Spektralbereich nicht einheitlich als Low-E-System bezeichnet werden. Sie sind mehr oder weniger stark gefärbt und dienen nicht vorrangig der Wärmedämmung, sondern dem Sonnenschutz. Z. B. bringt die Firma Southwall Europe solche stärker gefärbten Schichtsysteme, die zwei oder sogar drei Schichten aus Silber im System enthalten, auf Polyethylenterephthalat (PET)-Folien auf und bezeichnet sie dann als Solar-Control-Folienprodukte.

Alle genannten Systeme gehören zu Schichtsystemen, die dadurch charakterisiert sind, dass sie mindestens eine Metallschicht aus Gold, Silber oder Kupfer enthalten, die zwischen Schichten aus transparenten Metalloxiden eingebettet ist, und aufgrund der durch die Metallschichten verursachten hohen Reflexion und der damit verbundenen niedrigen Emissivität im infraroten Spektralbereich im weiteren zusammenfassend als Low-E-Schichtsysteme bezeichnet werden sollen.

Im Architekturglasbereich dominieren Schichtsysteme. Meistens bildet eine nur etwa 10 nm dicke Silberschicht die funktionelle Basis, und um die Transparenz des Glases im sichtbaren Spektralbereich zu erhalten, wird das Silber durch Einbettung in hochbrechende Oxide für diese Wellenlängen entspiegelt. Dafür werden meist Zinndioxid, aber auch Zinkoxid, Wismut(III)-Oxid oder Indium(III)-Oxid verwendet. Zusätzlich sind sogenannte Blockerschichten erforderlich, die eine Korrosion der Silberschicht verhindern, und fast immer schließen Deckschichten zur Erhöhung der Kratzfestigkeit das Schichtsystem nach außen ab.

Die Herstellung des Schichtsystems erfolgt durch Magnetronsputtern im Vakuum, wobei Floatglasformate in Herstellungsbreite von 3,21 m und 6 m Länge auf der sogenannten Feuer- oder Atmosphärenseite beschichtet werden. Das so entstandene Low-E-Glas wird zu Zweifach- oder Dreifach-Isolierglas verschiedenster Formate oder auch zu Verbundsicherheitsglas (VSG) weiterverarbeitet. Die beschichtete Glasseite befindet sich dabei von der Außenluft geschützt im Inneren des hermetisch abgeschlossenen Scheibenzwischenraumes des Isolierglases bzw. im Inneren des Glasverbundes unmittelbar in der Grenzfläche zu einer durchsichtigen Klebeschicht (meist eine thermoplastische Polyvinylbutyral (PVB)-Folie).

Bei einer anderen Variante von Isolierglas ist eine ebenfalls mittels Magnetronsputtern ähnlich beschichtete Folie in dem hermetisch abgeschlossenen Scheibenzwischenraum zwischen zwei unbeschichteten Glasscheiben aufgespannt. Das direkte Anbringen solcher beschichteten Folien, die zusätzlich zwischen PVB-Folien laminiert und mit einem speziellen Adhäsiv versehen sind, auf bestehenden Fenstern und Fassaden wird ebenfalls praktiziert.

Auch bei der Produktion und Weiterverarbeitung der Low-E-Gläser und -Folien besteht Bedarf zur Kennzeichnung, die in vielen anderen Produktionsprozessen bereits angewendet wird. Sie erleichtert einerseits die Organisation des Produktionsablaufes und ermöglicht andererseits die Produktverfolgung. Wegen des ständigen Inhaltswechsels der Kennzeichnung kommen nur lasergestützte Kennzeichnungsverfahren, die computergesteuert sind, in Frage, da diese sehr viel flexibler sind als beispielsweise gedruckte Stempel oder dgl.

Eine Möglichkeit bestünde darin, bekannte lasergestützte Kennzeichnungsverfahren auf das Trägermaterial der Low-E-Schichten, also Glas oder Folie, anzuwenden. Damit müssten dann aber jeweils die Nachteile der bekannten Verfahren in Kauf genommen werden.

Bekannte Verfahren (DE 41 26 626 C2, DE 44 07 547 C2, DE 198 55 623 C1) zur Kennzeichnung von Glas nutzen z.B. die Erzeugung von Mikrorissen im Inneren des Glases durch Ausnutzung nicht-linearer Prozesse im Fokusbereich von Laserstrahlung, für die das Glas transparent ist. Die Mikrorisse streuen und absorbieren Licht aus dem sichtbaren Spektralbereich und sind dadurch sichtbar. Diese Verfahren schwächen aufgrund der lokalen Rissbildung die mechanische Stabilität und sind deshalb nachteilig, insbesondere bei sehr dünnen Gläsern.

Der Nachteil mechanischer Schädigungen ist auch mit dem Verfahren zur Beschriftung oder Dekoration von Oberflächen transparenter Substrate, insbesondere von Substraten aus Glas (EP 0 531 584 A1), verbunden. Bei diesem Verfahren wird auf die Oberfläche eine Hilfsschicht aufgetragen, die Laserstrahlung mit Wellenlängen zwischen 0,3 und 1,6 µm absorbiert, in der bei Laserbestrahlung ein erhitztes Plasma entsteht, das bearbeitend auf das Substrat wirkt. Diese indirekte Interaktion des Laserstrahls mit dem transparenten Substrat verursacht Rillen in der Oberfläche, die ein ähnliches Aussehen der bestrahlten Bereiche bewirken wie das nach Sandstrahlen oder nach einer chemischen Mattierung.

Keine mechanischen Beschädigungen treten bei der Methode der farbigen Innenbeschriftung (siehe /1/ und /2/) auf, bei der durch lokal begrenzte Erwärmung des Glases infolge Absorption von Laserstrahlung Nanopartikel aus Gold, Silber oder Kupfer innerhalb des Glases erzeugt werden. Sie färben das Glas rot (Gold und Kupfer) und im Falle von Silber gelb. Nachteil dieser Verfahren ist, dass sie nur bei Gläsern angewendet werden können, in die schon beim Erschmelzen Gold-, Silber- oder Kupferionen eingebaut wurden (DE 198 41 547 B4) oder in denen in einem zusätzlichen Verfahrensschritt vor der Laserbestrahlung mittels Ionenaustausch Na-Ionen der Glasoberfläche durch Silber- oder Kupferionen einer mit der Glasoberfläche in Kontakt befindlichen Salzschmelze ersetzt wurden. In beiden Fällen müssen darüber hinaus im Glas Ionen enthalten sein, die bei thermischer Einwirkung das ionische Gold, Silber oder Kupfer zu Atomen reduzieren, bevor diese sich wegen ihrer geringen Löslichkeit im Glas als Nanopartikel ausscheiden.

In DE 101 19 302 A1 und WO 02/083589 A1 wird beschrieben, wie der zusätzliche Verfahrensschritt vor der Einwirkung der Laserstrahlung dadurch vermieden werden kann, dass der zu beschriftende Teil der Glasoberfläche während des Einwirkens der Laserstrahlung Kontakt mit einem Spendermedium für Silber- oder Kupferionen hat. Die zur Erzeugung der die Glasfärbung hervorrufenden metallischen Nanopartikel notwendigen Prozesse Ionenaustausch und Diffusion von Silber- oder Kupferionen in das Glas, deren Reduktion zu Atomen und die Aggregation zu Nanopartikeln finden dann quasi alle gleichzeitig während der Einwirkung der Laserstrahlung statt.

Bezugnehmend auf DE 101 19 302 A1 werden in DE 102 50 408 A1 als Spendermedien für Silberionen Beschichtungen empfohlen, und deren Zusammensetzung sowie Verfahren zur Herstellung der Beschichtungszusammensetzung und zur Beschichtung angegeben. Die beschriebenen Zusammensetzungen enthalten zumindest eine Silberverbindung, die in einem wässrigen und/oder organischen Lösungsmittel löslich ist und mindestens ein Bindemittel. Das Auftragen der Schicht und das notwendige Abwaschen nach Beendigung der Laserbestrahlung bleiben ein Nachteil.

Hilfsschichten, die nach der Laserbestrahlung wieder entfernt werden müssen, sind auch für ein Verfahren zur Oberflächenstrukturierung beliebiger Materialien (DD 221 401 A1) und eine Methode zur Erzeugung visuell beobachtbarer Markierungen auf transparenten Materialien (US 64 42 974 B1) erforderlich. In beiden Fällen wird die Struktur bzw. die Markierung auf den Oberflächen durch Übertragung von Material aus den Hilfsschichten gebildet. Dies geschieht durch Einsatz von Laserstrahlung, die ein Erhitzen, Schmelzen und Verdampfen des Materials in den bestrahlten Bereichen der Hilfsschichten bewirkt. Das Hauptanwendungsgebiet von DD 221 401 A1 liegt bei der Erzeugung von Leiterbahnen für die Mikroelektronik und das von US 64 42 974 B1 bei der Markierung von im Verkehrswesen eingesetzten Windschutzscheiben aus Mehrscheibensicherheitsglas.

In DE 101 62 111 A1 wird ein Verfahren beschrieben, bei dem außer der Laserbestrahlung keine weiteren Schritte erforderlich sind, um in einem durchsichtigen Bauteil eine dauerhafte Markierung anzubringen. Die Markierung weist dabei einen Abstand von der Oberfläche auf und besteht in dem mechanisch nicht geschädigten Material nur aus einer Zone mit gegenüber dem Ausgangszustand veränderter komplexer Brechzahl, die sichtbar ist und durch optische Verfahren nachgewiesen werden kann. Die Veränderungen der komplexen Brechzahl werden dabei durch nicht-lineare optische Effekte der Anregung bei hoher Leistungsdichte im Fokus eines Laserstrahles, der aus ultrakurzen Impulsen mit Impulsdauern unter 10⁻¹⁰ s besteht, erzeugt. Eingesetzt wird dazu z.B. ein Ti:Saphir-Laser, dessen hoher Preis von Nachteil ist.

Es ist auch bekannt, Low-E-Schichtsysteme mithilfe von Laserstrahlen zu strukturieren, d. h. in die kontinuierlich abgeschiedene Schicht punkt- oder linienförmige, ggf. sogar flächige Unterbrechungen einzubringen. Dies dient beispielsweise zum Abteilen von Leiterbahnabschnitten durch Trennlinien (elektrische Isolierung bei Nutzung der Schichtsysteme als elektrische Widerstandsheizung), zum Herstellen von lokalen Fenstern für die ansonsten reflektierten Strahlen ("Kommunikationsfenster"), oder schlicht zum Entfernen der Beschichtung z. B. entlang dem Rand einer Trägermaterialscheibe, wenn dort ein Kleberstrang mit guter Haftung aufgebracht werden soll. Diese Strukturierungen sind farblos und beruhen darauf, dass die Schicht lokal vollständig entfernt wurde.

Die Aufgabe der Erfindung besteht darin, ein Verfahren zur farbigen Strukturierung, das nicht an das Trägermaterial, also Glas oder Polymerfolie, sondern direkt an das Low-E-Schichtsystem gebunden ist, keine weiteren Prozessschritte außer der Einwirkung geeigneter Laserstrahlung benötigt und nicht auf kostenintensive Laser zur Erzeugung ultrakurzer Impulse unter 10⁻¹⁰ s Dauer angewiesen ist, zu entwickeln sowie mit diesem Verfahren farbig strukturierte Low-E-Schichtsysteme als neues Erzeugnis einzuführen.

Diese Aufgabe wird gemäß Patentanspruch 1 gelöst durch ein farbig strukturiertes Low-E-Schichtsystem, bei dem im Bereich der Farbstrukturen das Schichtsystem verändert ist zu einer Matrix mit Nanopartikeln aus Gold, Silber, oder Kupfer, die aus den ursprünglich in Schichten vorliegenden Substanzen des Schichtsystems gebildet ist, und durch ein Verfahren zur Erzeugung der Farbstrukturen gemäß Patentanspruch 7.

Bei dem Verfahren wird Laserstrahlung mit einer Wellenlänge aus dem entspiegelten Spektralbereich des Low-E-Schichtsystems auf das Low-E-Schichtsystem gerichtet und durch deren Absorption in der Metallschicht diese so stark erwärmt, dass es im bestrahlten Bereich zu einer drastischen Veränderung des Schichtsystems kommt. Als Folge der Veränderung liegt das Gold, Silber oder Kupfer in Form von Nanopartikeln vor, eingebettet in eine Matrix, gebildet aus den ursprünglich in Schichten vorliegenden Substanzen des Schichtsystems. Diese Materialkonfiguration ist mit einer Färbung verbunden. Die Farbe variiert in Durchsicht zwischen hellgelb und dunkelbraun im Fall von Silber und verschiedenen Rottönen (Gold, Kupfer) und zwar je nach erzeugter Partikelgröße, -konzentration und -verteilung sowie Brechzahl der entstandenen Matrix, die alle durch die Bestrahlungsbedingungen steuerbar sind. Bei schräger Beobachtung der bestrahlten Bereiche dominiert die Reflexionswirkung und sie haben dann das Aussehen aufgedampfter Metallschichten.

Bei einer bevorzugten Ausführungsform wird ein Strahl mit gaußförmiger Intensitätsverteilung eines gepulsten Nd : YAG-Lasers auf das Low-E-Schichtsystem fokussiert. Bereits durch einen einzigen Impuls von 2 10⁻⁷ s Dauer und einer Energie von 0,4 mJ wird eine farbige kreisförmige Fläche (Pixel) mit einem Durchmesser - je nach dem Grad der Fokussierung - von weniger als 10 µm bis 100 µm erzeugt.

Wie profilometrisch ermittelt wurde, stellt der Pixel eine Vertiefung in dem Schichtsystem dar, die von einem Wall umgeben ist. Der Wall ist im Mikroskop als farbige, ringförmige Begrenzung einer andersfarbigen kreisförmigen Fläche zu erkennen. Das Ausmaß der Vertiefung und die Höhe des Walles hängen wieder von den konkreten Bestrahlungsbedingungen und dem konkretem Aufbau des Schichtsystems ab. Typische Werte sind 60 nm (Vertiefung) bzw. 20 nm (Wall). Sie lassen sich durch Einwirkung weiterer Impulse auf die gleiche Fläche verändern, wobei bei Impulsfolgefrequenzen zwischen 300 Hz und 3000 Hz relativ schnell Sättigungswerte erreicht werden.

Die farbigen Pixel lassen sich durch eine Relativbewegung zwischen Laserstrahl und Schichtsystem zu beliebigen Markierungen, Beschriftungen, dekorativen Strukturen und Halbtonbildern zusammensetzen, wobei die Strukturen auch in sich noch farbig strukturiert sein können oder kontinuierliche Farbverläufe aufweisen können.

Werden Flächen mit makroskopisch einheitlichem Aussehen aus einzelnen Pixeln zusammengesetzt, so kann das Aussehen durch unterschiedliche gegenseitige Anordnung der Pixel variiert werden. Der Farbeindruck, den eine aus nicht überlappenden Pixeln aufgebaute Fläche macht, ist ein anderer als der, den eine aus überlappenden Pixeln gebildete erzeugt.

Ähnlich lassen sich Flächen mit makroskopisch einheitlicher Ansicht aus Linien mit mehr oder weniger starkem Grad an Überlappung und dann unterschiedlichem Aussehen aufbauen, wozu schon mikroskopisch in Farbe und Form sehr unterschiedliche Linien verwendet werden können.

Das mikroskopische Erscheinungsbild der Linien wird durch den Grad der Pixel-Überlappung, also von Relativgeschwindigkeit zwischen Low-E-Schichtsystem und Laserstrahl sowie der Impulsfolgefrequenz und ganz wesentlich von der Intensität des Laserstrahls beeinflusst.

Bei Intensitäten, die am unteren Ende des nutzbaren Intensitätsbereiches liegen, entstehen gegenüber der Oberfläche um etwa 20 µm erhöhte Linien mit einem rechteckförmigen Querschnitt und im Fall von silberbasierten Schichtsystemen dunkelbrauner Farbe. Bei Intensitäten, die näher am oberen Ende des nutzbaren Intensitätsbereiches liegen, das durch die geringste Intensität bestimmt wird, von der ab Schädigungen des Trägermaterials auftreten, sind die mittleren Teile der Linien erniedrigt und können auch tiefer als die Oberfläche des unbestrahlten Schichtsystems liegen. Die Linien sind dann also parallel zu ihrer Längsausdehnung von Wällen begrenzt. Im Mikroskop sind diese Wälle als dunklere Begrenzungen einer helleren Linie erkennbar. Aus solchen Linien zusammengesetzte makroskopische Flächen zeigen in Durchsicht auf silberbasierten Schichtsystemen gelbe bis hellgelbe Färbungen.

Die durch Laserbestrahlung erzeugten farbigen Strukturen sind mechanisch mindestens so stabil wie das unbehandelte Low-E-Schichtsystem und chemisch beständig gegenüber Wasser, üblichen Haushaltschemikalien und Lösungsmitteln. Gegenüber UV-Strahlung sind sie unempfindlich, auch bei sehr langen Einwirkungszeiten. Die thermische Stabilität wird durch die der PET-Folie begrenzt, falls sich das Low-E-Schichtsystem auf einer solchen befindet. Auf Float-Glas widerstehen sie Temperaturen bis 550° C. Dann setzt eine Farbänderung ein, ohne dass die Formen der Strukturen verändert werden.

Die gefärbten Bereiche haben keine Low-E-Eigenschaft mehr, die hohe Reflexion im nahen infraroten Spektralbereich ist abgebaut, und im sichtbaren Spektralbereich existiert eine ausgeprägte Reflexionsbande. Außerdem ist die relativ gute Oberflächenleitfähigkeit verlorengegangen und entspricht der von üblichen Flachgläsern.

### Ausführungsbeispiele

### Beispiel 1

Als Ausgangsmaterial wird ein Low-E-Schichtsystem benutzt, das sich auf der Atmosphärenseite einer 4 mm dicken Floatglasscheibe befindet. In dem Schichtsystem folgen ausgehend von der Glasoberfläche die nachfolgend aufgeführten Materialien mit den in Klammern angegebenen Schichtdicken, gemessen in nm, aufeinander: SnO₂ (30), ZnO (2), Ag (13), TiO₂ (2,6), SnO₂ (40).

Auf das Schichtsystem wurde Laserstrahlung der Wellenlänge 1064 nm eines gütegeschalteten Nd : YAG-Lasers fokussiert, wozu der Originalstrahl mit einem Durchmesser von 1 mm und einem gaußförmigen Intensitätsprofil nacheinander einen 1:4- Strahlaufweiter und eine Sammellinse mit einer Brennweite von 30 mm durchlief. Auf diese Weise wurden deutlich voneinander getrennte Orte einem Einzelimpuls mit einer Dauer von 200 ns und einer Energie ausgesetzt, die zwischen 0,3 mJ und 12 mJ variiert wurde.

Im Ergebnis entstanden Pixel mit einem Durchmesser von etwa 100 µm.

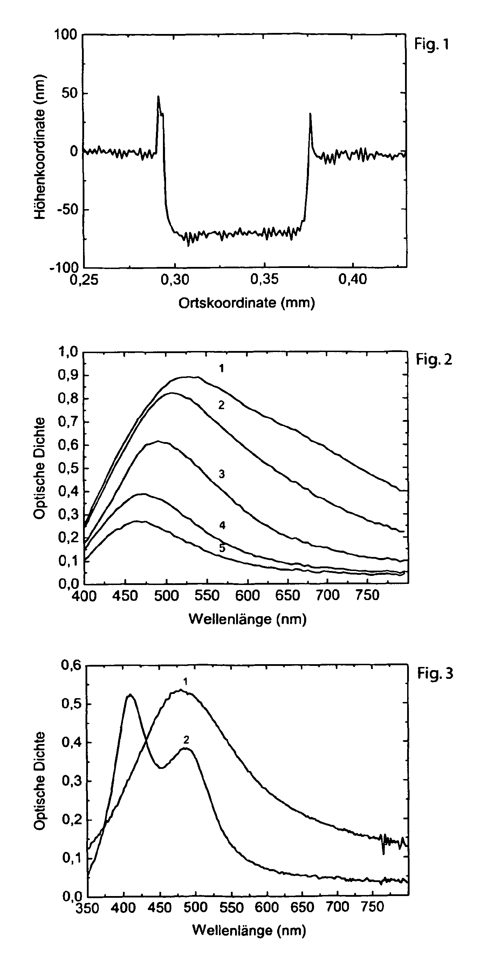

Fig. 1 zeigt das Höhenprofil des mit einem Impuls der Energie 0,3 mJ erzeugten Pixels entlang einer Geraden durch den Pixel-Mittelpunkt, auf der der Nullpunkt der Ortskoordinate willkürlich außerhalb des dargestellten Bereiches liegt und der Nullpunkt der Höhenkoordinate die Lage der Oberfläche des unbehandelten Schichtsystems charakterisiert. Man erkennt deutlich die Bildung eines den Pixel umgebenden Walles und die kraterartige Vertiefung in der Mitte.

In Fig. 2 ist die mit einem Mikroskop-Spektralphotometer im zentralen Bereich der Pixel gemessene Optische Dichte als Funktion der Wellenlänge dargestellt, wobei die fortlaufende Nummerierung der Kurven wachsender Energie der Einzelimpulse entspricht.

### Beispiel 2

Auf einer Low-E-Scheibe der im Beispiel 1 beschriebenen Art wurde, wie dort erläutert, durch einen Einzelimpuls ein farbiger Pixel erzeugt. Anschließend wurde die Scheibe einer Temperaturbehandlung von einer Stunde Dauer bei 600° C ausgesetzt. Dabei kam es zu einer Farbänderung des Pixels.

In Fig. 3 ist die Farbänderung durch die im Zentrum des Pixels mit einem Mikroskop-Spektralphotometer als Funktion der Wellenlänge gemessenen Optischen Dichte vor (Kurve 1) und nach (Kurve 2) der Wärmebehandlung dokumentiert.

### Beispiel 3

Auf dem im Beispiel 1 beschriebenen Low-E-Schichtsystem wurden mit dem ebenfalls in diesem Beispiel beschriebenen Laser farbige Flächen aus einander nicht überlappenden parallelen Linien erzeugt. Die Linien entstanden bei feststehendem Laser durch eine Bewegung des Schichtsystems in der Fokusebene mit einer Geschwindigkeit von 2 mm/s bei einer Impulsfolgefrequenz von1 kHz. Abweichend vom Beispiel 1 wurde zur Fokussierung der Laserstrahlung jetzt eine Linse mit einer Brennweite von 70 mm benutzt.

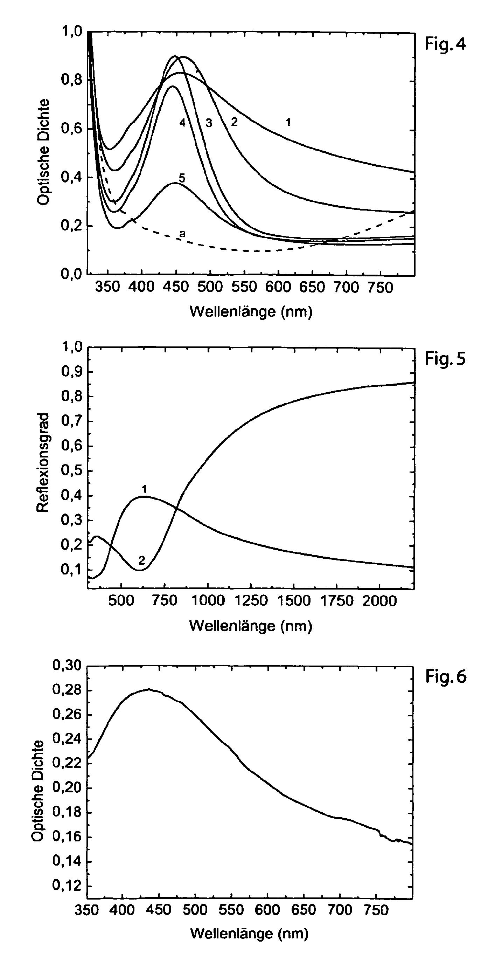

Fig. 4 zeigt eine Auswahl der an verschiedenen Flächen gemessenen Optischen Dichte als Funktion der Wellenlänge, wobei die fortlaufende Nummerierung der Kurven wachsender Energie der Impulse entspricht, die zwischen 0,3 mJ und 12 mJ variiert wurde. Die gestrichelte Kurve a wurde am unbehandelten Schichtsystem gemessen.

In Fig. 5 ist die Wellenlängenabhängigkeit des Reflexionsgrades einer der verfärbten Flächen (Kurve 1) zusammen mit der des unbehandelten Schichtsystems (Kurve 2) dargestellt. Die Messung erfolgte mit unter 6° auf die beschichtete Seite des Glases auftreffendem Licht, also bei nahezu senkrechter Inzidenz.

### Beispiel 4

Ausgangsmaterial für dieses Ausführungsbeispiel ist eine kommerzielle Low-E-Kunststofffolie (PET) vom Typ Heat Mirror^{®} HM 55 der Firma Southwall Europe GmbH, bei der die funktionelle Silberschicht zur Entspiegelung im sichtbaren Spektralbereich in Indium (III)-Oxid eingebettet ist. Auf ihr wurde mit einer kommerziellen Laserbeschriftungsanlage StarMark^{®} SMC 65 (Fa. rofin, Baasel Lasertech) mit einem lampengepumpten Nd : YAG-Laser von 65 W Nennleistung als Strahlquelle eine zehnstellige Zahl mit 600 dpi Auflösung innerhalb von 12s angebracht. Die einzelnen Ziffern haben eine Größe von 5,2 mm und eine Strichbreite von 0,6 mm.

Fig. 6 zeigt die mit einem Mikroskop-Spektralphotometer auf einer Ziffer gemessene Optische Dichte als Funktion der Wellenlänge.

### Literaturübersicht

/1/ T. Rainer, K.-J. Berg, G. Berg. "Farbige Innenbeschrift von Floatglas durch CO2-Laserbestrahlung", Kurzreferat der 73. Glastechnischen Tagung, Halle (Saale) 1999, Deutsche Glastechnische Gesellschaft (DGG), S. 127 - 130
/2/ T. Rainer. "Wird Fensterglas zum High-Tech-Material? Kleine Teilchen, große Wirkung", Glaswelt 6/2000, S. 46 - 51

## Patentansprüche

1. Farbig strukturierte Low-E-Schichtsysteme, die mindestens eine Metallschicht aus Gold, Silber oder Kupfer enthalten, die zwischen Schichten aus transparenten Metalloxiden eingebettet ist, **dadurch gekennzeichnet, dass** im Bereich der farbigen Strukturen das Schichtsystem verändert ist zu einer Materialkonfiguration, bei der das Gold, Silber oder Kupfer in Form von Nanopartikeln vorliegt, eingebettet in eine Matrix, die aus den ursprünglich in Schichten vorliegenden Substanzen des Schichtsystems gebildet ist.

2. Low-E-Schichtsysteme nach Anspruch 1, **dadurch gekennzeichnet, dass** die Strukturen aus überlappenden oder nicht überlappenden Pixeln bestehen.

3. Low-E-Schichtsysteme nach Anspruch 1 oder 2, **dadurch gekennzeichnet, dass** die Schichtsysteme sich auf einem Trägermaterial befinden.

4. Low-E-Schichtsysteme nach einem der Ansprüche 1 bis 3, **dadurch gekennzeichnet, dass** das Trägermaterial ein Glas, vorzugsweise Floatglas, ist.

5. Low-E-Schichtsysteme nach einem der Ansprüche 1 bis 3, **dadurch gekennzeichnet, dass** das Trägermaterial eine Kunststofffolie, vorzugsweise Polyethylenterephthalat (PET), ist.

6. Low-E-Schichtsysteme nach einem der Ansprüche 1 bis 3 und 5, **dadurch gekennzeichnet, dass** die Schichtsysteme sich auf PET-Folien als Trägermaterial befinden und zusätzlich auf oder zwischen Polyvinylbutyral-(PVB)-Folien angeordnet sind.

7. Verfahren zur Farbstrukturierung von Low-E-Schichtsystemen, die mindestens eine Metallschicht aus Gold, Silber oder Kupfer enthalten, die zwischen Schichten aus transparenten Metalloxiden eingebettet ist, **dadurch gekennzeichnet, dass** Laserstrahlung mit einer Wellenlänge aus dem entspiegelten Spektralbereich des Schichtsystems auf das Low-E-Schichtsystem gerichtet wird, wodurch im bestrahlten Bereich das Schichtsystem zu einer Nanopartikel aus Gold, Silber oder Kupfer enthaltenden Matrix, die sich aus den ursprünglich in den Schichten vorliegenden Substanzen bildet, verändert wird.

8. Verfahren nach Anspruch 7, **dadurch gekennzeichnet, dass** die Strahlung eines Nd : YAG-Lasers verwendet wird.

9. Verfahren nach Anspruch 7 oder 8, **dadurch gekennzeichnet, dass** ein Laserstrahl mit gaußförmigem Intensitätsprofil verwendet wird.

10. Verfahren nach einem der Ansprüche 7 bis 9, **dadurch gekennzeichnet, dass** ein Laserstrahl aus Impulsen mit einer Dauer von > 10⁻¹⁰ s verwendet wird.

11. Verfahren nach einem der Ansprüche 7 bis 10, **dadurch gekennzeichnet, dass** eine fokussierte Laserstrahlung verwendet wird.

12. Verfahren nach einem der Ansprüche 7 bis 11, **dadurch gekennzeichnet, dass** die farbige Struktur durch eine Relativbewegung zwischen Laserstrahl und Low-E-Schichtsystem erzeugt wird.

13. Verfahren nach einem der Ansprüche 7 bis 12, **dadurch gekennzeichnet, dass** die farbige Struktur aus Pixeln erzeugt wird.

14. Verfahren nach einem der Ansprüche 7 bis 13, **dadurch gekennzeichnet, dass** durch eine geeignete Kombination von Impulsfolgefrequenz und Relativgeschwindigkeit farbige Linien aus einander überlappenden Pixeln erzeugt werden.

15. Verfahren nach einem der Ansprüche 7 bis 14, **dadurch gekennzeichnet, dass** aus parallelen Linien mit einem mehr oder weniger starken Grad an Überlappung farbige Flächen erzeugt werden.

16. Verfahren nach einem der Ansprüche 7 bis 15, **dadurch gekennzeichnet, dass** durch die Variierung der Bedingungen Relativgeschwindigkeit, Impulsfolgefrequenzen und Impulsenergie sowie Fokussierung der Laserstrahlung unterschiedliche Strukturen hinsichtlich ihrer Färbung und Form erzeugt werden.

17. Verfahren nach einem der Ansprüche 7 bis 16, **dadurch gekennzeichnet, dass** nach der Laserbestrahlung eine thermische Behandlung des Low-E-Schichtsystems zur Farbänderung durchgeführt wird.

18. Verfahren nach einem der Ansprüche 7 bis 17, **dadurch gekennzeichnet, dass** die Schichtsysteme auf ein Trägermaterial aufgebracht werden.

19. Verfahren nach einem der Ansprüche 7 bis 18, **dadurch gekennzeichnet, dass** als Trägermaterialien Glas, vorzugsweise Floatglas oder Kunststofffolien, vorzugsweise PET-Folien, verwendet werden.

20. Verwendung von Low-E-Schichtsystemen mit farbigen Strukturen nach einem der Ansprüche 1 bis 6 als Informationsträger.

21. Verwendung von Low-E-Schichtsysteme mit farbigen Strukturen nach einem der Ansprüche 1 bis 6 zu dekorativen Zwecken.

## Claims

1. Low-E layered systems comprising coloured structures, which contain at least one metal layer of gold, silver, or cropper, which is embedded between layers of transparent metal oxides, **characterised in that** in the area of the coloured structures the layer system is changed to a material configuration in which the gold, silver, or copper is present in the form of nanoparticles, embedded in a matrix which is formed from the substances of the layer system originally present in layers.

2. Low-E layered systems according to Claim 1, **characterised in that** the structures consist of overlapping or non-overlapping pixels.

3. Low-E layered systems according to Claim 1 or 2, **characterised in that** the layered systems are located on a carrier material.

4. Low-E layered systems according to one of Claims 1 to 3, **characterised in that** the carrier material is a glass, for preference a float glass.

5. Low-E layered systems according to one of Claims 1 to 3, **characterised in that** the carrier material is a plastic film, for preference polyethylene tereplithalate (PET).

6. Low-E layered systems according to one of Claims 1 to 3 and 6, **characterised in that** the layered systems are located on PET films as the carrier material and are additionally arranged on or between polyvinyl butyral (PVB) films.

7. Method for the coloured structuring of low-F. layered systems which contain at least one metal layer of gold, silver, or copper, which is embedded between layers of transparent metal oxides, **characterised in that** a laser beam with a wavelength of the anti-reflection coated spectral range of the layered system is directed onto the low-E layered system, as a result of which, in the irradiated area, the layered system is changed to a matrix containing nanoparticles of gold, silver, or copper, which is formed from the substances originally present in the layers.

8. Method according to Claim 7, **characterised in that** the radiation from an Nd : YAG laser is used.

9. Method according to Claim 7 or 8, **characterised in that** a laser beam with a Gaussian-shaped intensity profile is used.

10. Method according to one of Claims 7 to 9, **characterised in that** a laser beam with pulses with a duration of 10⁻¹⁰ s is used.

11. Method according to one of Claims 7 to 10, **characterised in that** a focussed laser beam is used.

12. Method according to one of Claims 7 to 11, **characterised in that** the coloured structure is produced by a relative movement between laser beam and low-E layered system.

13. Method according to one of Claims 7 to 12, **characterised in that** the coloured structure is produced from pixels.

14. Method according to one of Claims 7 to 13, **characterised in that**, by means of a suitable combination of pulse sequence frequency and relative speed, coloured lines are produced from pixels overlapping one another.

15. Method according to one of Claims 7 to 14, **characterised in that** coloured surfaces are produced from parallel lines with a more or less substantial degree of overlapping.

16. Method according to one of Claims 7 to 15, **characterised in that**, by the varying of the conditions of relative speed, pulse sequence frequencies, and pulse energy, as well as the focussing of the laser radiation, different structures are produced in respect of their colouring and shape.

17. Method according to one of Claims 7 to 16, **characterised in that**, after the laser irradiation, a thermal treatment of the low-E layered system is carried out to cause the colour change.

18. Method according to one of Claims 7 to 17, **characterised in that** the layered systems are applied onto a carrier material.

19. Method according to one of Claims 7 to 18, **characterised in that** use is made as the carrier materials of glass, for preference float glass, or plastic films, for preference PET films.

20. Use of low-E layered systems with coloured structures according to one of Claims 1 to 6 as information carriers.

21. Use of low-E layered systems with coloured structures according to one of Claims 1 to 6 for decorative purposes.

## Revendications

1. Systèmes de couches basse émissivité à structures en couleurs, qui comprennent au moins une couche métallique en or, argent ou cuivre, qui est incorporée entre des couches d'oxydes métalliques transparents, **caractérisés en ce que** le système de couches est modifié dans la zone des structures en couleurs en une configuration matérielle dans laquelle l'or, l'argent ou le cuivre se présente sous la forme de nanoparticules, incorporées dans une matrice, qui est formée à partir de substances du système de couches présentes à l'origine dans les couches.

2. Systèmes de couches basse émissivité selon la revendication 1, **caractérisés en ce que** les structures se composent de pixels qui se chevauchent ou ne se chevauchent pas.

3. Systèmes de couches basse émissivité selon la revendication 1 ou 2, **caractérisés en ce que** les systèmes de couches se trouvent sur un matériau support.

4. Systèmes de couches basse émissivité selon l'une des revendications 1 à 3, **caractérisés en ce que** le matériau support est un verre, de préférence un verre plat.

5. Systèmes de couches basse émissivité selon l'une des revendications 1 à 3, **caractérisés en ce que** le matériau support est un film plastique, de préférence du polyéthylène téréphtalate (PET).

6. Systèmes de couches basse émissivité selon l'une des revendications 1 à 3 et 5, **caractérisés en ce que** les systèmes de couches se trouvent sur des films en PET à titre de matériau support et qu'ils sont en plus disposés sur ou entre des films de polyvinylbutyral (PVB).

7. Procédé de structuration en couleur de systèmes de couches basse émissivité, qui comprennent au moins une couche métallique en or, argent ou cuivre, qui est incorporée entre des couches d'oxydes métalliques transparents, **caractérisé en ce que** le rayon laser est dirigé sur le système de couches basse émissivité avec une longueur d'ondes de la zone spectrale anti-reflet du système de couches, moyennant quoi le système de couches est modifié dans la zone irradiée en une matrice comprenant des nanoparticules d'or, d'argent ou de cuivre, qui se forme à partir des substances présentes à l'origine dans les couches.

8. Procédé selon la revendication 7, **caractérisé en ce que** l'on utilise le rayon d'un laser Nd : YAG.

9. Procédé selon la revendication 7 ou 8, **caractérisé en ce que** l'on utilise un rayon laser avec un profil d'intensité de forme gaussienne.

10. Procédé selon l'une des revendications 7 à 9, **caractérisé en ce que** l'on utilise un rayon laser constitué d'impulsions ayant une durée de > 10⁻¹⁰ s.

11. Procédé selon l'une des revendications 7 à 10, **caractérisé en ce que** l'on utilise un rayon laser focalisé.

12. Procédé selon l'une des revendications 7 à 11, **caractérisé en ce que** la structure en couleurs est produite par un mouvement relatif entre le rayon laser et le système de couches basse émissivité.

13. Procédé selon l'une des revendications 7 à 12, **caractérisé en ce que** la structure en couleurs est produite à partir de pixels.

14. Procédé selon l'une des revendications 7 à 13, **caractérisé en ce que** des lignes de couleurs sont produites à partir de pixels se chevauchant grâce à une combinaison appropriée de fréquence de répétition des impulsions et de vitesse relative.

15. Procédé selon l'une des revendications 7 à 14, **caractérisé en ce que** des surfaces en couleurs sont produites à partir de lignes parallèles ayant un degré plus ou moins important de chevauchement.

16. Procédé selon l'une des revendications 7 à 15, **caractérisé en ce que** des structures différentes sur le plan de leur coloration et de leur forme sont produites par la variation des conditions de vitesse relative, de fréquences de répétition des impulsions et d'énergie des impulsions ainsi que de la focalisation du rayon laser.

17. Procédé selon l'une des revendications 7 à 16, **caractérisé en ce qu'**un traitement thermique du système de couches basse émissivité est réalisé après l'irradiation laser pour la modification de la couleur.

18. Procédé selon l'une des revendications 7 à 17, **caractérisé en ce que** les systèmes de couches sont déposés sur un matériau support.

19. Procédé selon l'une des revendications 7 à 18, **caractérisé en ce que** l'on utilise comme matériaux supports le verre, de préférence le verre plat ou des films plastiques, de préférence des films en PET.

20. Utilisation des systèmes de couches à basse émissivité avec des structures en couleurs selon l'une des revendications 1 à 6 à titre de supports d'information.

21. Utilisation des systèmes de couches à basse émissivité avec des structures en couleurs selon l'une des revendications 1 à 6 à des fins décoratives.
